# FASCICULE DE BREVET EUROPEEN

(11) **EP 3 487 942 B1**
(45) Date de publication et mention de la délivrance du brevet: **02.09.2020**
(21) Numéro de dépôt: 17748547.1
(22) Date de dépôt: 19.07.2017
(51) Int. Cl.: C09D 5/24, C09D 5/00, H01B 1/24, H01M 8/0206, H01M 8/1018, H01M 8/0228

(54) **PROCÉDÉ DE DÉPÔT D'UN REVÊTEMENT ADHÉSIF AU MÉTAL, HYDROPHOBE ET ÉLECTRIQUEMENT CONDUCTEUR**
VERFAHREN ZUR AUFTRAGUNG EINER METALLHAFTENDEN, HYDROPHOBISCHEN UND ELEKTRISCH-LEITENDEN BESCHICHTUNG
PROCESS FOR THE DEPOSITION OF A COATING BEING ADHERENT TO METAL, HYDROPHOBIC AND ELECTRICALLY CONDUCTING

(30) Priorité: 19.07.2016 FR 1656877
(43) Date de publication de la demande: 29.05.2019
(73) Titulaire: Compagnie Générale des Etablissements Michelin, 63000 Clermont-Ferrand (FR)
(72) Inventeur: FEDURCO, Milan, 63040 Clermont-Ferrand Cedex 9 (FR); DELFINO, Antonio, 63040 Clermont-Ferrand Cedex 9 (FR); OLSOMMER, David, 63040 Clermont-Ferrand Cedex 9 (FR)
(74) Mandataire: Desbordes, Guillaume
(86) Numéro de dépôt international: PCT/FR2017/051965
(87) Numéro de publication internationale: WO 2018/015658

(56) Documents cités:
- WO-A1-2015/107276
- US-B2- 7 365 121
- VIRGINIE DELHORBE ET AL: "Fluorohexane network and sulfonated PEEK based semi-IPNs for fuel cell membranes", JOURNAL OF MEMBRANE SCIENCE, ELSEVIER BV, NL, vol. 389, 10 octobre 2011 (2011-10-10), pages 57-66, XP028394202, ISSN: 0376-7388, DOI: 10.1016/J.MEMSCI.2011.10.015 [extrait le 2011-10-15]
- CHIKH L ET AL: "(Semi-)Interpenetrating polymer networks as fuel cell membranes", JOURNAL OF MEMBRANE SCIENCE, ELSEVIER BV, NL, vol. 368, no. 1-2, 15 février 2011 (2011-02-15), pages 1-17, XP027575120, ISSN: 0376-7388 [extrait le 2010-12-24]

## Description

### 1. DOMAINE DE L'INVENTION

Le domaine de la présente invention est celui des compositions solides utilisables notamment comme revêtement adhésif au métal, hydrophobe et électriquement conducteur.

Elle se rapporte plus particulièrement aux procédés de dépôt de telles compositions, parfois qualifiées aussi de « peintures », sur des substrats au moins en partie métalliques, en particulier sur des plaques bipolaires en acier pour piles à combustible à membrane polymère échangeuse d'ions, dites « PEM » (pour *Proton Exchange Membrane*).

### 2. ETAT DE LA TECHNIQUE

On rappellera tout d'abord qu'une pile à combustible PEM est constituée d'un empilage de cellules électrochimiques élémentaires connectées électriquement en série et qui, chacune, développe une certaine tension, en général comprise entre 0,3 et 1,1 Volts. La tension totale développée par la pile vaut donc la somme des tensions élémentaires, par exemple de l'ordre de quelques centaines de Volts pour des piles à combustible visant des applications au domaine des transports.

Chaque cellule électrochimique élémentaire est habituellement constituée de la superposition de cinq couches : une feuille en matériau polymère dont une zone forme une membrane échangeuse d'ions, deux électrodes comportant des éléments chimiques nécessaires au déroulement de la réaction électrochimique, comme par exemple du platine, et deux couches de diffusion des gaz (GDL pour *Gaz Diffusion Layer*) permettant d'assurer une diffusion homogène des gaz utilisés sur la totalité de la surface de la membrane échangeuse d'ions.

L'alimentation des gaz est assurée par des plaques que l'on appelle en général « plaques bipolaires » car elles sont en contact avec l'anode d'une cellule et avec la cathode de la cellule adjacente.

Ces plaques bipolaires remplissent deux fonctions très différentes. On sait qu'il faut alimenter la pile en gaz carburant et en gaz comburant, c'est-à-dire en hydrogène et en air ou en oxygène pur, et qu'il faut également la refroidir, c'est-à-dire la faire traverser par un fluide de refroidissement comme de l'eau. L'une des fonctions des plaques bipolaires est de permettre l'acheminement de ces différents fluides nécessaires au fonctionnement de la pile à combustible. Par ailleurs, les plaques bipolaires remplissent également une fonction électrique : assurer la conduction électrique entre l'anode et la cathode de chacune des cellules électrochimiques adjacentes.

Ces différentes fonctions, acheminer les fluides et conduire l'électricité, donnent le cahier des charges auquel doivent satisfaire les matériaux utilisés pour la réalisation de ces plaques bipolaires. Les matériaux utilisés doivent présenter une très grande conductibilité électrique, ils doivent aussi être étanches aux fluides utilisés et faire preuve d'une très grande stabilité chimique vis-à-vis de ces fluides.

En outre, les plaques bipolaires doivent présenter les caractéristiques mécaniques suffisantes pour permettre la superposition d'un grand nombre de cellules électrochimiques élémentaires et plaques bipolaires associées et le maintien de l'ensemble par compression entre des plaques d'extrémité grâce à des tirants. Elles doivent donc présenter des caractéristiques mécaniques suffisantes pour supporter cette compression.

Le graphite est couramment utilisé car ce matériau offre tout à la fois une grande conductibilité électrique et est chimiquement inerte aux fluides utilisés. A titre d'exemple, la demande de brevet WO 2005/006472 montre une réalisation possible de telles plaques bipolaires. On voit qu'elles sont constituées par la superposition de deux plaques en graphite relativement rigides avec interposition d'une feuille réalisée en matière graphite assez souple afin de s'accommoder des tolérances d'épaisseur des différentes couches. Les plaques en graphites comportent les réseaux de canaux nécessaires à la distribution des gaz carburant et en gaz comburant, et le réseau de canaux permettant de faire traverser chaque plaque bipolaire par un fluide de refroidissement comme de l'eau. Malheureusement, les éléments rigides participant à la constitution des plaques bipolaires en graphite sont assez fragiles aux chocs, en particulier pendant les manipulations lors de l'assemblage de la pile. La couche réalisée en matériau graphite souple, dont il a été fait état précédemment, est en outre tout particulièrement difficile à manipuler de façon industrielle. Tout ceci pénalise de façon importante les coûts de fabrication de telles plaques bipolaires.

Des plaques bipolaires en acier, notamment en acier inox ou recouvertes d'acier inox sont également connues pour ce type d'applications. Si elles sont certes beaucoup plus robustes mécaniquement que des plaques en graphite, elles doivent être toutefois recouvertes de revêtements de protection protégeant le métal contre la corrosion, capables d'adhérer au métal tout en offrant une conductivité électrique suffisante, ce qui rend la formulation de tels revêtements ainsi que leurs procédés de dépôt particulièrement complexes à mettre au point. De telles plaques bipolaires et/ou leurs revêtements de protection et/ou des procédés de dépôts de tels revêtements ont par exemple été décrits dans les documents brevet US 6 372 376, US 6 379 476, US 6 537 359, US 7 365 121, US 7 910 262, WO 02/13300.

L'objet de la présente invention est de proposer un procédé de dépôt nouveau qui permet l'obtention d'un revêtement de protection pour plaque bipolaire qui répond aux exigences décrites ci-dessus, tout en conférant avantageusement à ce revêtement non seulement souplesse et flexibilité, mais aussi des propriétés auto-obturantes particulièrement avantageuses.

### 3. BREVE DESCRIPTION DE L'INVENTION

Ainsi, selon un premier objet, la présente invention concerne un procédé de dépôt sur un substrat dont au moins la surface est au moins en partie métallique, d'un revêtement adhésif au métal, hydrophobe et électriquement conducteur, ledit revêtement étant à base de microparticules électriquement conductrices et d'une matrice polymère P comportant au moins un polymère fluoré thermoplastique P1 et une résine thermodurcissable P2, ledit procédé comportant au moins les étapes suivantes :
- dans un premier récipient, dissoudre le polymère P1 dans un solvant organique, dit premier solvant, de ce polymère ;
- dans un deuxième récipient, disperser les microparticules électriquement conductrices dans un solvant organique du polymère P1, dit deuxième solvant, identique ou différent du premier solvant ;
- ajouter, dans le premier récipient, la résine thermodurcissable P2 à l'état liquide;
- mélanger le contenu des premier et deuxième récipients puis déposer le mélange ainsi obtenu sur le substrat ;
- réticuler la résine P2 et éliminer les solvants, pour obtention d'un premier revêtement, dit revêtement intermédiaire, sur le substrat ;
- puis imprégner la surface du substrat ainsi revêtu d'une solution de résine P2 additionnelle dissoute dans un solvant, dit troisième solvant, qui est un solvant de la résine P2 et un non-solvant du polymère P1 ;
- éliminer le troisième solvant et réticuler tout en la comprimant la résine P2 additionnelle, pour l'obtention du revêtement final visé sur le substrat.

Ce procédé de l'invention est avantageusement mis en œuvre pour le dépôt d'un tel revêtement sur une plaque bipolaire en acier, en particulier en acier inox, pour pile à combustible.

L'invention concerne également tout substrat dont au moins la surface est au moins en partie métallique et revêtue d'un revêtement adhésif au métal, hydrophobe et électriquement conducteur, susceptible d'être obtenu par le procédé de l'invention, en particulier toute plaque bipolaire en acier, en particulier en acier inox, pour pile à combustible.

L'invention ainsi que ses avantages seront aisément compris à la lumière de la description détaillée et des exemples de réalisation qui suivent.

### 4. DESCRIPTION DETAILLEE DE L'INVENTION

Dans la présente demande, sauf indication expresse différente, tous les pourcentages (%) indiqués sont des pourcentages en masse (ou en poids, de manière équivalente).

L'expression « x et/ou y » signifie « x » ou « y » ou les deux (c'est-à-dire « x et y »). Tout intervalle de valeurs désigné par l'expression « entre a et b » représente le domaine de valeurs allant de plus de « a » à moins de « b » (c'est-à-dire bornes « a » et « b » exclues) tandis que tout intervalle de valeurs désigné par l'expression « de a à b » signifie le domaine de valeurs allant de « a » jusqu'à « b » (c'est-à-dire incluant les bornes strictes « a » et « b »).

Un premier objet de la présente invention est donc un procédé de dépôt sur un substrat dont au moins la surface est au moins en partie métallique, d'un revêtement adhésif au métal, hydrophobe (anti-corrosion) et électriquement conducteur, ce revêtement (donc par définition solide) étant à base de microparticules électriquement conductrices et d'une matrice polymère P comportant au moins un polymère fluoré thermoplastique P1 et une résine (ou composition de résine) thermodurcissable P2, ledit procédé comportant au moins les étapes suivantes :
- dans un premier récipient, dissoudre le polymère P1 dans un solvant organique, dit premier solvant, de ce polymère ;
- dans un deuxième récipient, disperser les microparticules électriquement conductrices dans un solvant organique du polymère P1, dit deuxième solvant, identique ou différent du premier solvant ;
- ajouter, dans le premier récipient, la résine thermodurcissable P2 à l'état liquide;
- mélanger le contenu des premier et deuxième récipients puis déposer le mélange (suspension) ainsi obtenu sur le substrat ;
- réticuler la résine P2 et éliminer les solvants, pour obtention d'un premier revêtement, dit revêtement intermédiaire, sur le substrat ;
- puis imprégner la surface du substrat ainsi revêtu d'une solution de résine P2 additionnelle dissoute dans un solvant, dit troisième solvant, qui est un solvant de la résine P2 et un non-solvant du polymère P1 ;
- éliminer le troisième solvant et réticuler tout en la comprimant la résine P2 additionnelle, pour l'obtention du revêtement final visé sur le substrat.

Préférentiellement, le polymère P1 comporte au moins un homopolymère ou un copolymère de fluorure de vinylidène (en abrégé « PVDF »), c'est-à-dire est constitué au moins en partie (i.e., partiellement ou en totalité) par un tel polymère. Ce type de polymère est bien connu, disponible commercialement, généralement sous forme de poudre ou de pastilles, par exemple auprès de la société Solvay sous la dénomination commerciale « Solef ». C'est notamment un liant habituel connu pour des plaques bipolaires non pas en métal, mais en graphite.

De préférence, la masse moléculaire moyenne en masse « Mw » de ce polymère P1 est comprise entre 100 000 et 1 000 000 g/mol, plus préférentiellement dans un domaine de 200 000 à 800 000 g/mol.

De préférence, le polymère P1 présente une température de transition vitreuse (Tg) inférieure à 50°C, plus préférentiellement inférieure à 0°C. Selon un autre mode de réalisation préférentiel, combiné ou non au précédent, il présente une température de fusion (Tf) inférieure à 250°C, plus préférentiellement inférieure à 200°C.

Le premier solvant, par définition solvant organique du polymère fluoré thermoplastique P1, est choisi de préférence dans le groupe constitué par tétrahydrofurane (THF), méthyl-éthyl-cétone (MEK), diméthyl-formamide (DMF), diméthyl-acétamide (DMA), diméthyl-sulfoxide (DMSO), tétraméthyl-urée (TMU), N-méthyl-2-pyrrolidone (NMP), N-éthyle-2-pyrrolidone (NEP), triméthyl-phosphate et les mélanges de tels solvants ; plus préférentiellement, ce solvant est la NMP.

Les microparticules électriquement conductrices peuvent être organiques ou inorganiques par exemple métalliques. A titre d'exemples de telles microparticules métalliques, peuvent être citées les particules de nickel, ou encore de nitrures de métaux tels que nickel, aluminium ou titane.

De préférence, ces microparticules ont une taille moyenne en masse qui est comprise entre 1 µm et 100 µm, plus préférentiellement comprise entre 1 et 50 µm, en particulier entre 2 et 25 µm.

Par « taille », on entend ici le diamètre dans le cas de particules sphériques, par exemple sous forme de poudre, ou la longueur (ou plus grande dimension) dans le cas de particules anisométriques, par exemple sous forme de bâtonnets ou de plaquettes.

Pour l'analyse de la granulométrie et le calcul de la taille moyenne des microparticules (ou diamètre moyen pour des microparticules supposées sensiblement sphériques), différentes méthodes connues sont applicables, par exemple par diffraction laser (par exemple selon la norme ISO-8130-13).

On peut aussi utiliser de manière simple, et préférentielle, une analyse de la granulométrie par un tamisage mécanique ; l'opération consiste à tamiser une quantité définie d'échantillon (par exemple 200 g) sur une table vibrante pendant 30 min avec des diamètres de tamis différents (par exemple, selon une raison de progression égale à 1,26, avec des mailles de 500, 400, ..., 100, 80, 63 µm, etc.) ; les refus récoltés sur chaque tamis sont pesés sur une balance de précision ; on en déduit le % de refus pour chaque diamètre de maille par rapport au poids total de produit ; la taille médiane (ou diamètre médian) est finalement calculée de manière connue à partir de l'histogramme de la distribution granulométrique.

Ces microparticules électriquement conductrices comportent préférentiellement au moins des microparticules de graphite, c'est-à-dire sont constituées au moins en partie (i.e., partiellement ou dans leur totalité) de graphite. Ces dernières peuvent se présenter sous forme de poudre et/ou sous forme lamellaire, par exemple sous forme de graphite exfolié de préférence de taille moyenne en masse comprise entre 2 et 15 µm et d'épaisseur comprise entre 50 et 150 nm (nanomètre).

Selon l'invention, les microparticules électriquement conductrices sont donc dispersées, c'est-à-dire mises en suspension, dans un deuxième récipient. On utilise pour cette dispersion un solvant organique du polymère P1, dit deuxième solvant, qui peut être identique ou différent du premier solvant. Avantageusement, premier et deuxième solvants sont identiques.

De manière générale, par « résine » ou « résine thermodurcie » P2, on entend dans la présente demande la (au moins une) résine en tant que telle et toute composition à base de cette résine (ou mélange de résines) et comportant au moins un (c'est-à-dire un ou plusieurs) additif(s), par exemple un système de réticulation au peroxyde. Cette résine, dans le revêtement final solide, est bien entendu réticulée (thermodurcie), en d'autres termes sous la forme d'un réseau de liaisons tridimensionnelles, dans un état propre aux polymères dits thermodurcissables (par opposition aux polymères dits thermoplastiques).

La résine thermodurcissable (produit de départ) utilisée est généralement liquide à 20°C ; elle est utilisée préférentiellement avec un solvant, en particulier le styrène, afin d'ajuster sa viscosité selon les conditions particulières de mise en œuvre de l'invention.

Le terme « liquide » dans la présente demande qualifie toute substance qui, à température ambiante (20°C) et sous pression atmosphérique, est dans l'état liquide c'est-à-dire a la capacité de prendre à terme, disons pour fixer les idées en moins d'une heure, la forme de son contenant ; par opposition, toute substance ne remplissant pas ce critère est considérée comme « solide » (à 20°C).

Il s'agit par définition d'une résine réticulable (i.e., durcissable) susceptible d'être réticulée, durcie par toute méthode connue, par exemple par rayonnement ou par traitement thermique, généralement en présence d'un système initiateur de polymérisation tel qu'un photo-initiateur ou un thermo-initiateur. On utilise de préférence un initiateur du type thermique, plus préférentiellement un peroxyde organique tel qu'un peroxyester, à titre d'exemple un méthyle éthyle cétone peroxyde (MEKP), un cumène hydroperoxyde (CHP) ou encore un mélange des deux à différents ratios, initiateur auquel peuvent être associés un accélérateur de réticulation, par exemple du type aniline (e.g. diméthyl-aniline ou DMA), ou un promoteur de réticulation par exemple un composé de cobalt (e.g. naphthénate de cobalt).

De préférence, la résine P2 comporte au moins une résine vinylester, en particulier du type époxyvinylester, c'est-à-dire est constituée au moins en partie (i.e., en tout ou partie) par une telle résine vinylester. On utilise plus particulièrement une résine époxyvinylester qui au moins pour partie est à base (c'est-à-dire greffée sur une structure du type) novolaque (encore appelée phénoplaste) et/ou bisphénolique, en d'autres termes préférentiellement une résine vinylester à base novolaque, bisphénolique, ou novolaque et bisphénolique, plus préférentiellement encore une résine vinylester du type bisphénol-époxy.

Une résine époxyvinylester à base novolaque (partie entre crochets dans la formule I ci-dessous) répond par exemple, de manière connue, à la formule (I) qui suit :

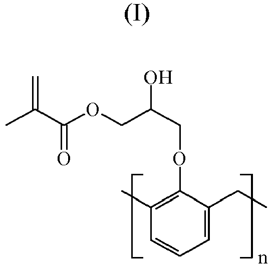

Une résine époxyvinylester à base bisphénolique A (partie entre crochets de la formule (II) ci-dessous) répond par exemple à la formule (le "A" rappelant que le produit est fabriqué à l'aide d'acétone):

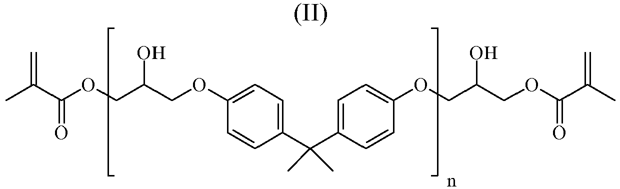

Une résine époxyvinylester de type bisphénolique a montré d'excellents résultats ; à titre d'exemples d'une telle résine, on peut citer notamment les résines de série « DION 9100 » commercialisées par la société Reichhold (contenant environ 45% de styrène), pour diverses applications, en particulier pour la fabrication de composites stratifiés à base de fibres de verre.

Préférentiellement, la résine P2 présente à l'état final réticulé, thermodurcie, une température de transition vitreuse Tg qui est comprise entre 30°C et 150°C, plus préférentiellement comprise entre 80°C et 150°C, en particulier entre 90°C et 130°C.

La résine (ou composition de résine) P2 est donc ajoutée dans le premier récipient à l'état liquide, telle que ou de préférence dans un solvant approprié, plus préférentiellement dans du styrène ; le solvant permet avantageusement, selon les modes de réalisation particuliers de l'invention, d'ajuster la viscosité de la résine, et donc celle de la peinture finale à l'état de suspension pour une application optimale de cette dernière avant sa réticulation ultérieure.

Après mélangeage du contenu des premier et deuxième récipients, le dépôt du mélange final obtenu (suspension) sur le substrat métallique pourra être conduit selon différentes méthodes générales bien connues de l'homme du métier, par exemple par application à l'aide d'un pinceau, par immersion dans un bain, ou encore par pulvérisation.

A ce stade, l'élimination des solvants précédemment utilisés peut être conduite par toute méthode connue de l'homme du métier, un simple séchage, une mise sous vide ou sous courant de gaz. Elle peut être préalable à ou concomitante avec la réticulation de la résine P2.

La réticulation de la résine P2, lors de l'obtention du revêtement intermédiaire sur le substrat, et donc la solidification dudit revêtement intermédiaire peut être conduite par toute méthode appropriée. Elle est conduite de préférence par chauffage, typiquement à une température supérieure à 100°C, ce qui permet d'éliminer le ou les solvant(s) utilisé(s) en même temps que se produit la réticulation. Cette dernière est opérée de préférence en présence d'un système thermo-initiateur de polymérisation dans la résine P2, par exemple un composé peroxyde.

Après obtention du revêtement intermédiaire, la surface du substrat ainsi revêtu (en d'autres termes, on l'aura bien compris, le revêtement intermédiaire solide lui-même) est imprégnée par une solution (donc par définition liquide) de résine (ou composition de résine) thermodurcissable P2 additionnelle qui est dissoute dans un solvant dit troisième solvant qui est à la fois un solvant de la résine P2 et un non-solvant du polymère P1. De préférence, le troisième solvant est l'acétone.

Cette étape d'imprégnation additionnelle du revêtement intermédiaire peut être conduite par toute technique connue telle que par exemple trempage, immersion, ou encore pulvérisation.

Puis, on élimine le troisième solvant et on réticule tout en la comprimant la résine P2 additionnelle, pour l'obtention du revêtement final (solide) visé sur le substrat.

Comme décrit précédemment, l'élimination ou évaporation du troisième solvant peut être conduite par toute méthode connue, séchage, mise sous vide ou sous courant de gaz. Elle peut être préalable à ou concomitante avec la réticulation de la résine P2.

De préférence, l'étape finale de réticulation de la résine P2 additionnelle est conduite par traitement thermique dans un moule sous pression. Ainsi, le troisième solvant (tout ou partie résiduelle), à supposer qu'il ne soit pas déjà éliminé préalablement, sera éliminé par évaporation à haute température.

La température du traitement thermique et réticulation dans le moule est de préférence supérieure à 150°C, plus préférentiellement entre 150°C et 200°C. Avantageusement, cette température de traitement thermique sera choisie supérieure à la température de transition vitreuse de la résine P2 et inférieure à la température de fusion du polymère P1.

La pression dans le moule est quant à elle préférentiellement supérieure à 10 bars, plus préférentiellement comprise entre 10 et 100 bars.

Grâce à son domaine de Tg spécifique préférentiel, la résine P2 est susceptible de conférer au revêtement final solide non seulement souplesse et flexibilité, mais aussi des propriétés auto-obturantes (« *self-sealing »*) améliorées grâce à une haute déformabilité, ce qui constitue un avantage notable pour les applications anticorrosion, en particulier pour une application de peinture de plaque bipolaire pour pile à combustible. Elle limite également la perméabilité de ce revêtement ou de cette peinture à haute température.

Grâce à l'apport de résine P2 additionnelle et de réticulation finale sous pression, après le premier revêtement intermédiaire, on a constaté en outre que les propriétés de conductivité électrique, d'hydrophobicité (anticorrosion) et auto-obturantes étaient encore améliorées.

Dans ce procédé conforme à l'invention, on a de préférence au moins une caractéristique qui suit, plus préférentiellement l'ensemble des caractéristiques qui suivent qui est vérifié(e) :
- le taux global de matrice polymère P (soit P1 plus P2 tous deux solides) représente 5% à 25%, plus préférentiellement 5% à 20% en poids du revêtement final solide ;
- le taux de microparticules électriquement conductrices représente 75% à 95%, plus préférentiellement 80 à 95%, en poids de ce revêtement final solide ;
- le taux (% en masse) de polymère P1, dans le revêtement final solide, est compris entre 1% et 15%, plus préférentiellement entre 2 et 10% ;
- le taux de résine P2 (solide) est quant à lui préférentiellement compris entre 2% et 15%, plus préférentiellement entre 5 et 12% ;
- le rapport pondéral P2/P1 est compris entre 0,2 et 5, plus préférentiellement entre 0,4 et 2,5.

Les températures de fusion (Tf) et de transition vitreuse (Tg) indiquées précédemment sont mesurées de manière connue par DSC (*Differential Scanning Calorimetry*), au second passage, par exemple et sauf indications différentes spécifiées dans la présente demande, selon la norme ASTM D3418 de 1999 (appareil DSC "822-2" de Mettler Toledo ; atmosphère azote ; échantillons préalablement portés (10°C/min) de -80°C à la température maximale visée (par exemple 200°C), puis refroidis rapidement (en 10 min) jusqu'à -80°C, avant enregistrement final de la courbe de DSC de -80°C à la température maximale visée (par exemple 200°C), selon une rampe de 10°C/min.

La masse moléculaire moyenne en masse (Mw) est mesurée par SEC (*Size Exclusion Chromatography*). Pour rappel, cette technique permet de séparer les macromolécules en solution suivant leur taille à travers des colonnes remplies d'un gel poreux. Les macromolécules sont séparées suivant leur volume hydrodynamique, les plus volumineuses étant éluées en premier.

La SEC est couplée à un réfractomètre, elle donne dans ce cas des informations relatives. À partir de produits étalons commerciaux, les différentes masses molaires moyennes en nombre (Mn) et en poids (Mw) qui caractérisent la distribution de masses molaires du polymère, peuvent être déterminées et l'indice de polymolécularité (Ip = Mw/Mn) calculé via un étalonnage dit de Moore. Il n'y a pas de traitement particulier de l'échantillon de polymère avant analyse. Celui-ci est simplement solubilisé dans le solvant d'élution à une concentration d'environ 1 g/L. La solution est ensuite filtrée sur un filtre de porosité 0,45 µm avant injection. L'appareillage utilisé est une chaîne chromatographique "WATERS alliance". Le solvant d'élution est le DMAC (diméthyle-acétamide), le débit de 0,7 ml/min, la température du système de 50°C et la durée d'analyse de 90 min. On utilise un jeu de quatre colonnes WATERS (1 colonne Styragel HMW7 + 1 colonne Styragel HMW6E + 2 colonnes Styragel HT6E). Le volume injecté de la solution d'échantillon de polymère est 100 µL. Le détecteur est un réfractomètre différentiel "WATERS 2414" et le logiciel d'exploitation des données chromatographiques est le système "WATERS EMPOWER". Les masses molaires moyennes calculées sont relatives à une courbe d'étalonnage réalisée à partir de polystyrènes étalons commerciaux « PSS READY CAL-KIT ».

Le revêtement final obtenu selon le procédé de l'invention précédemment décrit peut comporter, de manière optionnelle, divers additifs connus notamment pour entrer dans la formulation de revêtements ou peintures pour plaques bipolaires de piles à combustible, par exemple des promoteurs d'adhésion, des agents anticorrosion.

Le procédé de l'invention peut être mis en œuvre sur tout type de substrat dont au moins la surface est au moins en partie métallique.

Le procédé de l'invention est tout particulièrement mis en œuvre pour le dépôt d'une peinture sur une plaque bipolaire pour pile à combustible, cette plaque étant par exemple en acier, plus préférentiellement en acier inox revêtu optionnellement d'une fine couche métallique (donc couche intermédiaire) en un autre métal tel que par exemple du nickel, comme cela est expliqué plus en détail dans les exemples de réalisation qui suivent.

L'épaisseur du revêtement final solide, sur une telle plaque bipolaire, est de préférence comprise entre 10 et 60 µm, plus préférentiellement entre 15 et 50 µm. Lorsque l'acier inox est préalablement recouvert d'une couche intermédiaire d'un autre métal, par exemple du nickel, cette couche intermédiaire a une épaisseur comprise de préférence entre 2 et 20 µm, plus préférentiellement dans un domaine de 5 à 15 µm.

### 5. EXEMPLES DE REALISATION DE L'INVENTION

Dans les exemples qui suivent, on décrit le dépôt, conformément au procédé de l'invention, d'une peinture sur une plaque bipolaire pour pile à combustible PEM.

Des plaques en acier inox (acier 316 L), de dimensions 25 x 25 cm, ont été préalablement revêtues d'une fine couche intermédiaire de nickel, de manière connue par voie électrolytique, d'épaisseur égale à environ 10 µm. Puis la peinture a été déposée selon le procédé précédemment décrit, en appliquant successivement les étapes détaillées qui suivent.

### a) Préparation d'une solution de PVDF (à 5% dans NMP)

Dans un premier récipient (bouteille en verre teinté marron, de 100 ml, équipée d'un couvercle) ont été ajoutés 10 g de PVDF sous forme de poudre ("Solef 5320" de la société Solvay, Mw égal à environ 530 000 ; Tg égale à environ -40°C ; Tf égale à environ 160°C), puis 200 ml de NMP anhydre (qualité « Biotech », Sigma-Aldrich). Le tout a été agité (agitateur magnétique, durant toute une nuit) jusqu'à ce que le PVDF soit totalement dissous.

### b) Préparation d'une suspension des microparticules conductrices (mélange conducteur)

Dans un deuxième récipient (bouteille en verre de 250 ml équipée d'un couvercle), 12,5 g de graphite en poudre (« M850 » de la société Asbury Carbons) de taille moyenne égale à environ 5 µm et 6,25 g de graphite expansé sous forme lamellaire (« MX15 », société Timcal, Suisse) de taille moyenne égale à environ 17 µm, ont été dispersés dans 50 ml de NMP, le tout agité pendant toute une nuit. Puis, à cette suspension de graphite, ont été ajoutés 6,25 g de particules de nickel (taille moyenne 3 µm ; produit Sigma-Aldrich N° 266981, pureté 99,7%), pour obtention d'une composition ayant l'apparence d'une pâte semi-solide, le tout agité (sans barreau magnétique) pendant 5 min avant introduction du mélange de polymères préparé à l'étape c) qui suit.

### c) Préparation de la solution liquide PVDF/vinylester (mélange polymère)

Puis, dans le premier récipient de 100 ml, à 60,2 g de solution à 5% de PVDF préparée à l'étape a) ont été ajoutés 2,1 g de résine vinylester (« Dion 9100 » de Reichhold, Allemagne, à 45% de styrène ; Tg égale à environ 105°C), le tout agité (barreau magnétique) pendant 5 min. Enfin, 0,2 ml de thermo-initiateur CHP avec promoteur cobalt (« Trigonox 239 » de Akzo Nobel, solution à 45%) a été ajouté et la solution résultante (mélange polymère) agitée pendant 2 min.

### d) Addition du mélange polymère au mélange conducteur

Enfin, la solution de polymère préparée à l'étape c) ci-dessus a été versée avec précaution (rinçage final du premier récipient avec 15 ml de solvant NMP) dans le deuxième récipient contenant la suspension des microparticules. Le deuxième récipient a été refermé et agité 5 min (sans barreau magnétique).

A ce stade, le mélange final ou peinture à l'état de suspension avait la composition suivante (% en masse) : 12,5 g de « M850 » (41.51%), 6,25 g de « MX15 » (20,76%), 6,25 g de Ni (20.76%), 2,1 g de « Dion 9100 » (6.98%) and 3,01 g de PVDF « Solef 5320 » (10 %), le tout donnant 30,11 g (100 %) de solide.

### e) Dépôt de la peinture sur plaque bipolaire pour revêtement intermédiaire

Des échantillons de la peinture ainsi préparée ont été pulvérisés sur les plaques bipolaires à l'aide d'un pistolet de pulvérisation pneumatique (« Air Gupsa AZ3 HTE2 » de la société Anest Iwate Group ; Italie) en utilisant de l'azote comprimé (2,5 bar) comme gaz porteur. Les plaques étaient disposées verticalement dans un four préchauffé à 120°C, puis elles ont été traitées thermiquement à cette température pendant 60 min. Une fois le traitement terminé et les plaques refroidies à température ambiante (20°C), l'épaisseur moyenne (sur 5 mesures) de la peinture (revêtement intermédiaire) ainsi déposée à l'état solide (débarrassée de tout solvant) était égale à environ 30 µm.

### f) Imprégnation et traitement pour revêtement final

Les plaques bipolaires ainsi revêtues ont été ensuite imprégnées, par immersion deux fois de suite pendant 30 secondes dans une solution de 400 ml d'acétone, à titre de troisième solvant, contenant 24 g de résine vinylester (« Dion 9100 ») et de peroxyde (2,4 ml de « Trigonox 239 »). Puis les plaques ont été séchées à l'air après traitement, ensuite pressées dans un moule à 160°C pendant 1 heure, sous une pression d'environ 65 bars. On a laissé refroidir à température ambiante les plaques ainsi revêtues de leur revêtement final. L'épaisseur moyenne (sur 5 mesures) de peinture finale ainsi obtenue était égale à environ 30 µm.

### g) Mesures de conductivité électrique (tests ICR)

Chaque plaque bipolaire, ainsi revêtue de son revêtement final, a été ensuite disposée « en sandwich » entre deux couches GDL (« TGP-H-60 » de la société Torray) pour pile à combustible, elles-mêmes disposées entre deux électrodes de cuivre revêtues d'or (chacune de surface de contact utile de 10 cm²) alimentées par un appareil de mesure (micro-ohmmètre AOIP type « OM 15 ») injectant un courant de 1 A dans le circuit, entre les deux électrodes.

On a caractérisé la conductivité électrique en calculant la résistance dite de contact d'interface ou « ICR » (en mΩ.cm²) entre plaque et GDL en fonction de la pression de contact (50 à 200 N/cm²) exercée sur l'ensemble du dispositif plaque / GDL / électrodes lors de la mesure. Une telle méthode est bien connue, elle a été décrite dans de nombreuses publications, par exemple dans « Effect of manufacturing processes on contact resistance characteristics of metallic bipolar plates in PEM fuel cells », International Journal of Hydrogen Energy 36 (2011), 12370-12380 (voir notamment paragraphe 2.3), ou encore dans la demande de brevet WO 02/13300 (voir notamment Fig. 1 et 2).

Les résultats obtenus (voir tableau ci-dessous) sont excellents pour l'homme du métier : ils se sont révélés immédiatement, sans optimisation particulière, meilleurs que ceux obtenus avec une peinture commerciale (peinture Acheson de Henkel, données entre parenthèses) pour les mêmes conditions opératoires.

**Tableau**

| ICR (mΩ.cm²) / Pression de contact (N/cm²) | | | |
|---|---|---|---|
| 50 N/cm² | 100 N/cm² | 150 N/cm² | 200 N/cm² |
| 12.9 *(20.8)* | 9.0 *(15.6)* | 7.4 *(14.6)* | 6.1 *(13.5)* |

Il est à noter que, sans l'étape finale de dépôt de résine P2 additionnelle, puis réticulation sous pression de cette dernière, les conductivités obtenues étaient déjà excellentes (respectivement égales à environ 23, 16, 14 et 12 mΩ.cm², donc sensiblement identiques à celles mesurées avec la peinture commerciale).

En conclusion, le procédé de l'invention permet le dépôt d'un revêtement à conductivité électrique élevée, améliorée par rapport à celle de solutions antérieures connues, ayant des propriétés d'adhésion au métal élevées et une forte hydrophobicité, gage de très bonnes propriétés anti-corrosion, ce revêtement présentant en outre souplesse et flexibilité, ainsi que des propriétés auto-obturantes avantageuses.

## Revendications

1. Procédé de dépôt sur un substrat dont au moins la surface est au moins en partie métallique, d'un revêtement adhésif au métal, hydrophobe et électriquement conducteur, à base de microparticules électriquement conductrices et d'une matrice polymère P comportant au moins un polymère fluoré thermoplastique P1 et une résine thermodurcissable P2, ledit procédé comportant au moins les étapes suivantes :
- dans un premier récipient, dissoudre le polymère P1 dans un solvant organique, dit premier solvant, de ce polymère ;
- dans un deuxième récipient, disperser les microparticules électriquement conductrices dans un solvant organique du polymère P1, dit deuxième solvant, identique ou différent du premier solvant ;
- ajouter, dans le premier récipient, la résine thermodurcissable P2 à l'état liquide;
- mélanger le contenu des premier et deuxième récipients puis déposer le mélange ainsi obtenu sur le substrat ;
- réticuler la résine P2 et éliminer les solvants, pour obtention d'un premier revêtement, dit revêtement intermédiaire, sur le substrat ;
- puis imprégner la surface du substrat ainsi revêtu d'une solution de résine P2 additionnelle dissoute dans un solvant, dit troisième solvant, qui est un solvant de la résine P2 et un non-solvant du polymère P1 ;
- éliminer le troisième solvant et réticuler tout en la comprimant la résine P2 additionnelle, pour l'obtention du revêtement final visé sur le substrat.

2. Procédé selon la revendication 1, le taux de matrice polymère P représentant 5% à 25%, de préférence 5 à 20%, en poids du revêtement.

3. Procédé selon l'une quelconque des revendications 1 ou 2, le taux de microparticules représentant 75% à 95%, de préférence 80 à 95%, en poids du revêtement.

4. Procédé selon l'une quelconque des revendications 1 à 3, la taille moyenne en masse des microparticules étant comprise entre 1 et 100 µm, de préférence entre 1 et 50 µm.

5. Procédé selon l'une quelconque des revendications 1 à 4, les microparticules comportant des microparticules de graphite.

6. Procédé selon l'une quelconque des revendications 1 à 5, le polymère P1 ayant une masse moléculaire moyenne en poids notée « Mw » comprise entre 100 000 et 1 000 000 g/mol, de préférence dans un domaine de 200 000 à 800 000 g/mol.

7. Procédé selon l'une quelconque des revendications 1 à 6, le polymère P1 comportant un homopolymère ou un copolymère de fluorure de vinylidène.

8. Procédé selon l'une quelconque des revendications 1 à 7, le polymère P1 présentant une température de transition vitreuse inférieure à 50°C, de préférence inférieure à 0°C, et une température de fusion inférieure à 250°C, de préférence inférieure à 200°C.

9. Procédé selon l'une quelconque des revendications 1 à 8, la température de transition vitreuse de la résine P2, à l'état réticulé, étant comprise entre 30°C et 150°C, de préférence entre 80°C et 150°C.

10. Procédé selon l'une quelconque des revendications 1 à 9, la résine comportant une résine vinylester, de préférence une résine vinylester époxy bisphénol.

11. Procédé selon l'une quelconque des revendications 1 à 10, le rapport pondéral P2/P1 dans le revêtement étant compris entre 0,2 et 5, de préférence entre 0,4 et 2,5.

12. Procédé selon l'une quelconque des revendications 1 à 11, le taux de polymère P1 dans le revêtement étant compris entre 1% et 15%, de préférence entre 2 et 10%, et le taux de résine P2 dans le revêtement étant compris entre 2% et 15%, de préférence entre 5 et 12%.

13. Procédé selon l'une quelconque des revendications 1 à 12, dans lequel le premier solvant et le deuxième solvant sont identiques.

14. Procédé selon l'une quelconque des revendications 1 à 13, dans lequel le premier solvant est la N-Méthyl-2-Pyrrolidone, et le troisième solvant est l'acétone.

15. Procédé selon l'une quelconque des revendications 1 à 14, **caractérisé en ce qu'**il est mis en œuvre pour le dépôt d'un revêtement sur une plaque bipolaire en acier, de préférence en acier inox, pour pile à combustible.

## Patentansprüche

1. Verfahren zur Abscheidung einer metallhaftenden, hydrophoben und elektrisch leitfähigen Beschichtung auf der Basis von elektrisch leitfähigen Mikropartikeln und einer Polymermatrix P, umfassend mindestens ein thermoplastisches fluoriertes Polymer P1 und ein thermohärtbares Harz P2 auf einem Substrat, von dem mindestens die Oberfläche mindestens teilweise metallisch ist, wobei das Verfahren mindestens die folgenden Schritte umfasst:
- in einem ersten Behälter, Lösen des Polymers P1 in einem organischen Lösungsmittel, das als erstes Lösungsmittel bezeichnet wird, dieses Polymers;
- in einem zweiten Behälter, Dispergieren der elektrisch leitfähigen Mikropartikel in einem organischen Lösungsmittel des Polymers P1, das als zweites Lösungsmittel bezeichnet wird, und das mit dem ersten Lösungsmittel identisch oder davon verschieden ist;
- Zusetzen, in dem ersten Behälter, des thermohärtbaren Harzes P2 im flüssigen Zustand;
- Mischen des Inhalts des ersten und zweiten Behälters, anschließend Abscheiden der so erhaltenen Mischung auf dem Substrat;
- Vernetzen des Harzes P2 und Eliminieren der Lösungsmittel, um eine erste Beschichtung, die als Zwischenbeschichtung bezeichnet wird, auf dem Substrat zu erhalten;
- dann Imprägnieren der Oberfläche des so beschichteten Substrats mit einer Lösung von zusätzlichem Harz P2 in einem Lösungsmittel, das als drittes Lösungsmittel bezeichnet wird, wobei es sich um ein Lösungsmittel für das Harz P2 und ein Nichtlösungsmittel für das Polymer P1 handelt;
- Eliminieren des dritten Lösungsmittels und Vernetzen unter Komprimierung des zusätzlichen Harzes P2, um die erwähnte Endbeschichtung auf dem Substrat zu erhalten.

2. Verfahren nach Anspruch 1, wobei der Gehalt an Polymermatrix P 5 % bis 25 %, vorzugsweise 5 bis 20 %, bezogen auf das Gewicht der Beschichtung, beträgt.

3. Verfahren nach einem der Ansprüche 1 oder 2, wobei der Gehalt an Mikropartikeln 75 % bis 95 %, vorzugsweise 80 bis 95 %, bezogen auf das Gewicht der Beschichtung, beträgt.

4. Verfahren nach einem der Ansprüche 1 bis 3, wobei die mittlere Größe, bezogen auf die Masse, der Mikropartikel zwischen 1 und 100 µm, vorzugsweise zwischen 1 und 50 µm, beträgt.

5. Verfahren nach einem der Ansprüche 1 bis 4, wobei die Mikropartikel Graphit-Mikropartikel umfassen.

6. Verfahren nach einem der Ansprüche 1 bis 5, wobei das Polymer P1 eine gewichtsmittlere Molekularmasse, die als "Mw" bezeichnet wird, zwischen 100 000 und 1 000 000 g/mol, vorzugsweise in einem Bereich von 200 000 bis 800 000 g/mol, aufweist.

7. Verfahren nach einem der Ansprüche 1 bis 6, wobei das Polymer P1 ein Homopolymer oder ein Copolymer von Vinylidenfluorid umfasst.

8. Verfahren nach einem der Ansprüche 1 bis 7, wobei das Polymer P1 eine Glasübergangstemperatur von weniger als 50 °C, vorzugsweise weniger als 0 °C, und eine Schmelztemperatur von weniger als 250 °C, vorzugsweise weniger als 200 °C, aufweist.

9. Verfahren nach einem der Ansprüche 1 bis 8, wobei die Glasübergangstemperatur des Harzes P2, im vernetzten Zustand, zwischen 30 °C und 150 °C, vorzugsweise zwischen 80 °C und 150 °C, beträgt.

10. Verfahren nach einem der Ansprüche 1 bis 9, wobei das Harz ein Vinylesterharz, vorzugsweise ein Epoxy-Bisphenol-Vinylesterharz umfasst.

11. Verfahren nach einem der Ansprüche 1 bis 10, wobei das Gewichtsverhältnis P2/P1 in der Beschichtung zwischen 0,2 und 5, vorzugsweise zwischen 0,4 und 2,5, beträgt.

12. Verfahren nach einem der Ansprüche 1 bis 11, wobei der Gehalt an Polymer P1 in der Beschichtung zwischen 1 % und 15 %, vorzugsweise zwischen 2 % und 10 %, beträgt, und der Gehalt an Harz P2 in der Beschichtung zwischen 2 % und 15 %, vorzugsweise zwischen 5 % und 12 %, beträgt.

13. Verfahren nach einem der Ansprüche 1 bis 12, wobei das erste Lösungsmittel und das zweite Lösungsmittel identisch sind.

14. Verfahren nach einem der Ansprüche 1 bis 13, wobei das erste Lösungsmittel N-Methyl-2-pyrrolidon ist, und das dritte Lösungsmittel Aceton ist.

15. Verfahren nach einem der Ansprüche 1 bis 14, **dadurch gekennzeichnet, dass** es zur Abscheidung einer Beschichtung auf einer bipolaren Platte aus Stahl, vorzugsweise rostfreiem Stahl, für eine Brennstoffzelle eingesetzt wird.

## Claims

1. Process for depositing, on a substrate, at least the surface of which is at least partially metallic, a metal-adhesive, hydrophobic and electrically conductive coating based on electrically conductive microparticles and on a polymer matrix P comprising at least one thermoplastic fluoropolymer P1 and a thermosetting resin P2, said process comprising at least the following steps:
- in a first container, dissolve the polymer P1 in an organic solvent, referred to as first solvent, of this polymer;
- in a second container, disperse the electrically conductive microparticles in an organic solvent of the polymer P1, referred to as second solvent, identical to or different from the first solvent;
- add, in the first container, the thermosetting resin P2 in the liquid state;
- mix the contents of the first and second containers, then deposit the mixture obtained in this way on the substrate;
- crosslink the resin P2 and remove the solvents, in order to obtain a first coating, referred to as intermediate coating, on the substrate;
- then impregnate the surface of the substrate coated in this way with an additional resin solution P2 dissolved in a solvent, referred to as third solvent, which is a solvent of the resin P2 and a non-solvent of the polymer PI;
- eliminate the third solvent and crosslink while compressing the additional resin P2 in order to obtain the targeted final coating on the substrate.

2. Process according to Claim 1, the content of polymer matrix P representing 5% to 25%, preferably 5 to 20%, by weight of the coating.

3. Process according to either one of Claims 1 and 2, the content of microparticles representing 75% to 95%, preferably 80 to 95%, by weight of the coating.

4. Process according to any one of Claims 1 to 3, the weight-average size of the microparticles being between 1 and 100 µm, preferably between 1 and 50 µm.

5. Process according to any one of Claims 1 to 4, the microparticles comprising graphite microparticles.

6. Process according to any one of Claims 1 to 5, the polymer P1 having a weight-average molecular weight, Mw, of between 100 000 and 1 000 000 g/mol, preferably in a range from 200 000 to 800 000 g/mol.

7. Process according to any one of Claims 1 to 6, the polymer P1 comprising a homopolymer or a copolymer of vinylidene fluoride.

8. Process according to any one of Claims 1 to 7, the polymer P1 having a glass transition temperature of less than 50°C, preferably less than 0°C ,and a melting point of less than 250°C, preferably less than 200°C.

9. Process according to any one of Claims 1 to 8, the glass transition temperature of the resin P2, in the crosslinked state, being between 30°C and 150°C, preferably being between 80°C and 150°C.

10. Process according to any one of Claims 1 to 9, the resin comprising a vinyl ester resin, preferably a bisphenol epoxy vinyl ester resin.

11. Process according to any one of Claims 1 to 10, the P2/P1 weight ratio in the coating being between 0.2 and 5, preferably between 0.4 and 2.5.

12. Process according to any one of Claims 1 to 11, the content of polymer P1 in the coating being between 1% and 15%, preferably between 2 and 10%, and the content of resin P2 in the coating being between 2% and 15%, preferably between 5 and 12%.

13. Process according to any one of Claims 1 to 12, wherein the first solvent and the second solvent are identical.

14. Process according to any one of Claims 1 to 13, wherein the first solvent is N-methyl-2-pyrrolidone, and the third solvent is acetone.

15. Process according to any one of Claims 1 to 14, **characterized in that** it is implemented for the deposition of a coating on a fuel cell bipolar plate made of steel, preferably of stainless steel.
